# EUROPEAN PATENT APPLICATION

(11) **EP 4 451 201 A1**
(43) Date of publication of application: **23.10.2024**
(21) Application number: 21968259.8
(22) Date of filing: 13.12.2021
(51) Int. Cl.: G06Q 50/26, G06Q 50/10, H04W 4/021, H04W 4/029

(54) **ENVIRONMENT MANAGEMENT SYSTEM AND ENVIRONMENT MANAGEMENT METHOD BASED ON GEOFENCE**

(71) Applicant: Cesco Co., Ltd, Seoul 05288 (KR)
(72) Inventor: CHYUN, Chan Hyuk, Seoul 05288 (KR)
(74) Representative: Schneiders & Behrendt Bochum
(86) International application number: PCT/KR2021/018864
(87) International publication number: WO 2023/113050

(57) **Abstract**

Disclosed are an environment management system and environment management method based on a geofence. The environment management based on a geofence may comprise: a control server for creating a target geofence on the basis of a contamination source, and analyzing environmental conditions of a management area located in the target geofence region on the basis of information about the environment in the target geofence region; and a device for receiving information according to the analysis of the control server.

## Description

### TECHNICAL FIELD

The following embodiment relates to an environment management system and an environment management method based on a geofence.

### BACKGROUND ART

An environment of a certain area is influenced by a surrounding environment. The degree of influence of an environment varies depending on a distance from a certain area or a geographic factor. To precisely analyze an environment of a certain area, it is necessary to monitor an environment of a surrounding area including the certain area. A geofence refers to a defined geographic boundary. A geofence related to an environment of a certain area may be set to monitor the environment of the certain area. The boundary of a geofence generally refers to a fixed location but may be defined with reference to a flexible location. A user may monitor a geofence region by setting an arbitrary area to be monitored as a geofence.

The above description is information the inventor(s) acquired during the course of conceiving the present disclosure, or already possessed at the time, and is not necessarily art publicly known before the present application was filed

### DISCLOSURE OF THE INVENTION

### TECHNICAL GOALS

The purpose of an embodiment is to provide an environment management system and environment management method based on a geofence that analyzes an environmental condition of a management area by considering the influence of a surrounding area.

The purpose of an embodiment is to provide an environment management system and an environment management method based on a geofence that may provide response management information to a management apparatus and a user in response to an environmental change occurring around a management area.

The purpose of an embodiment is to provide an environment management system and an environment management method based on a geofence that may select a response action by analyzing the environment of a management area with a graded result.

### TECHNICAL SOLUTIONS

An environment management system based on a geofence according to an embodiment includes a control server configured to set a target geofence based on a contamination source and configured to analyze an environmental condition of a management area in the target geofence region based on environmental information in the target geofence region, and a device configured to receive information according to the analyzing of the control server.

An environment management method based on a geofence according to an embodiment includes setting a target geofence based on a location of a contamination source, analyzing an environmental condition of a management area in the target geofence region based on environmental information in the target geofence region, and transmitting management information according to the analysis result to a device based on a location of a device, in which the setting of the target geofence includes recognizing the contamination source, evaluating an environmental influence of the contamination source on a surrounding area of the contamination source, and setting a region of the target geofence based on the evaluating of the environmental influence.

### EFFECTS OF THE INVENTION

An environment management system and an environment management method according to an embodiment may analyze an environmental condition of a management area by considering the influence of a surrounding area.

An environment management system and an environment management method according to an embodiment may provide response management information to a management apparatus and a user in response to an environmental change occurring around a management area.

An environment management system and an environment management method according to an embodiment may select a response action by analyzing the environment of a management area with a graded result.

The effects of the environment management system and the environment management method according to an embodiment are not limited to the above-mentioned effects, and other unmentioned effects may be clearly understood from the following description by one of ordinary skill in the art

### BRIEF DESCRIPTION OF DRAWINGS

The accompanying drawings illustrate desired embodiments of the present disclosure and are provided together with the detailed description for better understanding of the technical idea of the present disclosure. Therefore, the present disclosure should not be construed as being limited to the embodiments set forth in the drawings.
FIG. 1 is a block diagram illustrating a configuration of an environment management system based on a geofence, according to an embodiment.
FIG. 2 is a block diagram illustrating a configuration of a control server, according to an embodiment.
FIG. 3 is a block diagram of a field of a management apparatus, according to an embodiment.
FIG. 4 is a diagram illustrating a geofence according to an embodiment.
FIG. 5 is a diagram illustrating an environmental condition analysis method according to an embodiment.
FIG. 6 is a diagram illustrating an environmental condition analysis method according to an embodiment.
FIG. 7 is a flowchart of generating a reference environmental index and an environmental grade, according to an embodiment.
FIGS. 8 and 9 are graphs illustrating a reference environmental index and an environmental grade, according to an embodiment.
FIG. 10 is a flowchart of a process of selecting a response action, according to an embodiment.
FIGS. 11 and 12 are graphs illustrating an expected environmental index according to an embodiment.
FIG. 13 is a response action matrix according to a combination of an environmental grade and an emergency grade, according to an embodiment.
FIG. 14 is a graph in which the expected environmental index according to FIG. 11 is regenerated according to the application of a response action.
FIG. 15 is a diagram illustrating a geofence according to an embodiment.
FIG. 16 is a diagram illustrating a method of setting a geofence region, according to an embodiment.
FIG. 17 is a diagram illustrating a form in which a geofence is set for a plurality of management areas, according to an embodiment.
FIG. 18 is a diagram illustrating a method of setting a geofence, according to an embodiment.
FIG. 19 is a diagram illustrating a method of setting a geofence, according to an embodiment.
FIG. 20 is a flowchart of an environment management method according to an embodiment.
FIG. 21 is a flowchart of setting a geofence, according to an embodiment.
FIG. 22 is a flowchart of analyzing the environment, according to an embodiment.
FIG. 23 is a flowchart of transmitting information, according to an embodiment.
FIG. 24 is a flowchart of an environment management method according to an embodiment.

### BEST MODE FOR CARRYING OUT THE INVENTION

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

In addition, terms such as first, second, A, B, (a), (b), and the like may be used to describe components of the embodiments. These terms are used only for the purpose of discriminating one component from another component, and the nature, the sequences, or the orders of the components are not limited by the terms. It should be noted that if one component is described as being "connected," "coupled" or "joined" to another component, the former may be directly "connected," "coupled," and "joined" to the latter or "connected", "coupled", and "joined" to the latter via another component.

The same name may be used to describe an element included in the embodiments described above and an element having a common function. Unless otherwise mentioned, the descriptions on the embodiments may be applicable to the following embodiments and thus, duplicated descriptions will be omitted for conciseness.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and/or DVDs; magnetooptical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter. The devices described above may be configured to act as one or more software modules in order to perform the operations of the embodiments, or vice versa.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer readable recording mediums.

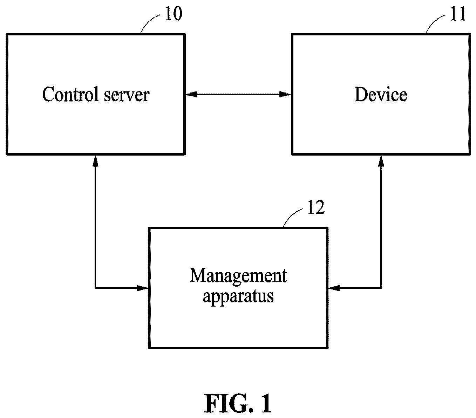

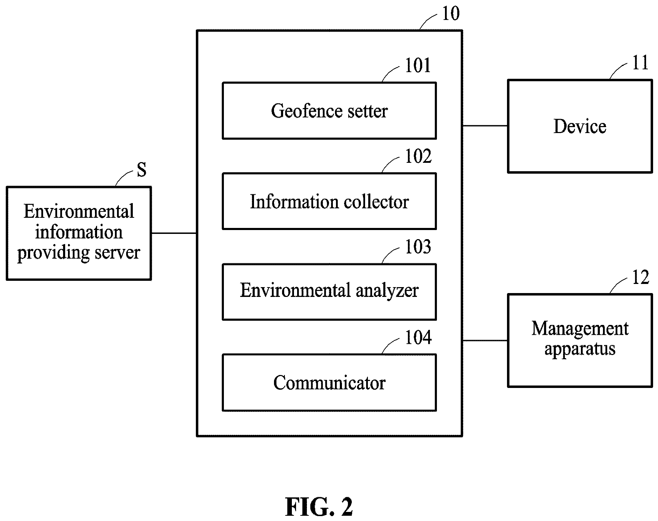

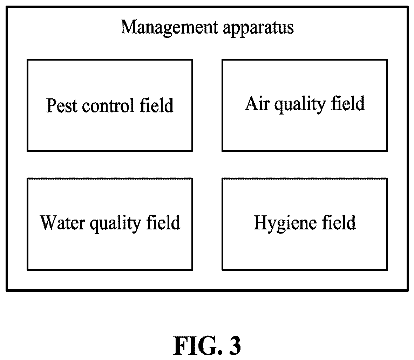

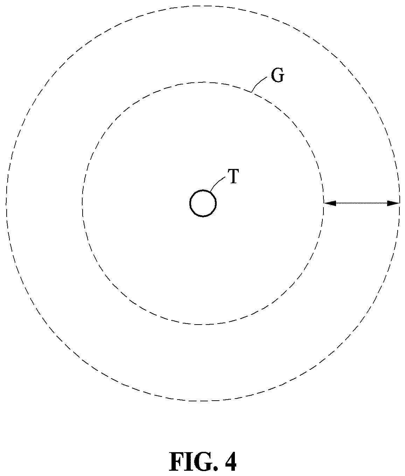

FIG. 1 is a block diagram illustrating a configuration of an environment management system based on a geofence, according to an embodiment, FIG. 2 is a block diagram illustrating a configuration of a control server, according to an embodiment, FIG. 3 is a block diagram of a field of a management apparatus, according to an embodiment, and FIG. 4 is a diagram illustrating a geofence according to an embodiment.

Referring to FIGS. 1 to 4, an environment management system 1 based on a geofence according to an embodiment may set and manage a predetermined range of a region including a management area as a geofence and may analyze an environmental condition of the management area through environmental information of the geofence region.

The geofence may refer to a virtual boundary formed in an actual geographical area. The environment management system 1 may set an area boundary of the geofence according to a set condition and may manage the environment based on area information of the set geofence. The size and the form of the area of the geofence may be arbitrarily set by the environment management system 1. Hereinafter, for ease of description, the 'geofence' may be referred to as a virtual boundary area that is arbitrarily set by the environment management system 1.

The environment management system 1 may analyze a condition of at least one environment of the air quality environment, the water quality environment, the pest control environment, the hygiene environment, and the disease environment.

The environment management system 1 may generate management information on the environment of the management area based on the analysis result through monitoring. The environment management system 1 may provide the generated management information to a user or a manager or may manage the environment of the management area through the generated management information.

The environment management system 1 according to an embodiment may include a control server 10, a device 11, and a management apparatus 12.

The control server 10 may set the geofence and may analyze the environmental condition of the management area through the environmental information in the set geofence region. The control server 10 may set a predetermined range as one management unit and may be installed in each management unit. The control server 10 may be divided into a plurality of configurations according to a function to be performed, as shown in FIG. 2. However, the configuration of the control server 10 is an example for ease of description, and the control server 10 may refer to an integrated processing module configured to complexly perform each function described below.

The device 11 may bidirectionally communicate with the control server 10 and may receive the analyzed management information from the control server 10. The device 11 may provide the received management information to a user or a manager who manages the management area. The device 11 may be, for example, various types of electronic devices such as a smartphone, a tablet personal computer (PC), a mobile phone, a video phone, an e-book reader, a desktop PC, a laptop PC, a netbook computer, a workstation, a personal digital assistant (PDA), a portable multimedia player (PMP), a mobile medical device, or a wearable device.

The control server 10 and the device 11 may communicate wirelessly. As a cellular communication protocol, wireless communication may use, for example, various methods such as long-term evolution (LTE), LTE Advance (LTE-A), code division multiple access (CDMA), wideband CDMA (WCDMA), a universal mobile telecommunication system (UMTS), wireless Broadband (Wibro), and global system for mobile communications (GSM). In addition, wireless communication may be applied with short-range communication such as wireless fidelity (WiFi), Bluetooth, near-field communication (NFC), and a global navigation satellite system (GNSS). Depending on the usage area or bandwidth, the GNSS may use, for example, a global positioning system (GPS), a global navigation satellite system (GLONASS), and a Beidou Navigation satellite system, or Galileo, the European global satellite-based navigation system, etc.

Location information of the device 11 may be provided to the control server 10. The device 11 may provide a real-time location of the device 11 to the control server 10 through communication, and the control server 10 may select management information to be transmitted to the device 11 based on the location of the device 11. This is described below. The device 11 may display the received management information to the owner of the device 11 on a display. The management information displayed on the device 11 may include environmental condition information of the management area, a suggestion for the user action guidance, and environmental information of a region where the user is located. In addition, the management information displayed on the device 11 may be provided to an administrator who manages the environment of the management area, that is, a manager. The management information may include an order for an environmental management service required for the management area.

The management apparatus 12 may be installed on the management area and may manage one or more environments of the management area. For example, the management apparatus 12 may manage at least one environment of a pest control environment, the air quality, the water quality, a hygiene environment, and a disease environment of the management area. For example, when the management apparatus 12 manages the pest control field, the management apparatus 12 may include a pest trapping device, a rat trapping device, etc. When the management apparatus 12 manages the air quality field, the management apparatus 12 may include an air purifier, a ventilator, a dehumidifier, a humidifier, a dispenser, etc. When the management apparatus 12 manages the water quality field, the management apparatus 12 may include a water purifier. The management apparatus 12 in the hygiene field may include a sterilizer, a disinfector, a bidet, etc. However, the type of the management apparatus 12 described above is an example and is not limited thereto.

The control server 10 may transmit and receive with at least one management apparatus 12. The control server 10 may be installed for each set area unit. The control server 10 may detect an environmental change event occurring around the management area. For example, the control server 10 may receive information on an environmental change in the detected area from the management apparatus 12. In an embodiment, the control server 10 may receive information on an event occurring in the management area from an external server. The external server may include, for example, at least one of the Meteorological Administration, National Emergency Management Agency, Air Korea, National Crop Disease and Pest Management System, National Air Pollution Information Management System, National Fine Dust Information Center, Water Environment Information System, and National Water Resources Management Comprehensive Information System. For example, the control server 10 may detect an environmental change event through a separate detection device (e.g., a management apparatus) disposed in a region near the management area.

The control server 10 may include a geofence setter 101, an information collector 102, an environmental analyzer 103, and a communicator 104. However, it should be noted that the configuration of the control server 10 is arbitrarily divided for ease of description, and the classification of components that perform a function of the control server 10 is not limited thereto.

The geofence setter 101 may set the predetermined range of the region as the geofence. In this case, one or more management areas may be included in the geofence region. The geofence may be set for each management area. In this case, the geofence for the management area may be set based on a characteristic of the management area. For example, the geofence setter 101 may set the size, form, and range of the geofence based on the characteristic of the management area. In this case, the characteristic of the management area may include at least one of a geographic location of the management area, a scale of the management area, a purpose of use of the management area, the number of residents in the management area, and information on the number of people entering the management area.

In an embodiment, the geofence region may be set centered on the management area. For example, the geofence may be set to include a predetermined radius range centered on the management area, as shown in FIG. 3. The set radius of the geofence may be set differently for each management area. For example, when the management area requires a precise level of environmental condition analysis, the set radius of the geofence may be wider.

The geofence may be set based on a certain location. For example, the geofence may be set based on a location of a certain contamination source. Hereinafter, for ease of description, the geofence set based on the contamination source may be referred to as a 'target geofence.' The target geofence is described below.

The information collector 102 may collect information on the environment of the management area.

The information collected by the information collector 102 may include information related to the environmental condition of the management area, for example, air quality information, water quality information, pest control information, hygiene information, and disease information.

The air quality information may include internal and external weather information of a measuring device that measures the air quality, and information on an atmospheric environment index and atmospheric components. The internal and external weather information of the measuring device may include information of at least one of temperature, humidity, wind direction, weather, time, and advisories or warnings issued by the Meteorological Administration at a point in which the measuring device is provided. The air quality information may include an air quality index including an air contamination level in a current state and an expected air contamination level after a predetermined time has elapsed. The air quality information may include information on various volatile organic compounds (VOCs) such as formaldehyde, radon, toluene, benzene, acetone, etc., which are carcinogenic substances emitted from various indoor building materials, and component information on the pollutant, such as nitrogen dioxide, etc. emitted from asbestos, ignition of gas used to cook food in the kitchen, or carbon dioxide, etc. produced during the human body's breathing process.

The water quality information may include at least one of internal and external weather information of a water quality measuring device that measures the water quality, water quality turbidity, chromaticity, carbonate hardness, total hardness, pH, odor, composition, dissolved oxygen amount, and conductivity. The internal and external weather information of the water quality measuring device may include at least one of temperature, humidity, wind direction, weather, time, and advisories or warnings issued by the Meteorological Administration in an area in which the measuring device is provided. In addition, the component may include total dissolved solids (TDS). TDS is total dissolved solids, which refers to minerals, salts, metals, cations, and anions dissolved in water. Additionally, measurement information of chloride ions, KMnO4 consumption, total hardness, sulfate ions, evaporation residue, detergents, iron, copper, zinc, manganese, and aluminum, which are aesthetic influencing materials, may be included. Information on health harmful inorganic substances, such as mercury, cyanide, arsenic, hexavalent chromium, cadmium, lead, fluorine, selenium, nitrate nitrogen, ammonia nitrogen, and boron, and health harmful organic substances, such as phenol, Tri-Halo Methane (THM), diazinon, parathion, fenitrothion, carbonyl, residual chlorine, benzene, toluene, ethylbenzene, xylene, chloroform, dibromochloromethane, 1.1.1-trichloroethane, 1.2-dibromo-3-chloropropane, tetrachloroethylene, chloral hydrate, trichloroethylene, dibromoacetonitrile, dichloroacetonitrile, trichloroacetonitrile, dichloromethane, 1.1-dichloroethylene, carbon tetrachloride, haloacetic acid, bromodichloromethane, and 1.4-dioxane may also be included. The water quality information may be water quality information including the level of flavor profile analysis (FPA).

The pest control information may include internal and external weather information of a pest trapping device that captures pests and pest information detected by the pest trapping device. For reference, in the present specification, the pests may collectively refer to insects and animals that harm humans and livestock. The internal and external weather information of the pest trapping device may include at least one of temperature, humidity, wind direction, weather, time, and advisories or warnings issued by the Meteorological Administration in an area in which the pest trapping device is provided. The pest information detected by the pest trapping device may include at least one of the type of pest, harmfulness information, behavior information according to season and time, access information, movement information, weight information, and food intake information.

The hygiene information may include at least one of internal and external weather information of a hygiene measuring device that measures hygiene and bacterial information inside and outside of the hygiene measuring device. The internal and external weather information of the hygiene measuring device may include at least one of temperature, humidity, wind direction, weather, time, and advisories or warnings issued by the Meteorological Administration in an area in which the measuring device is provided. The bacterial information may include various pieces of information that may analyze the status of remaining bacteria, such as the type of bacteria, the degree of bacterial reproduction, and the number of bacteria detected by the hygiene measuring device.

The disease information may include the type of disease, an occurrence location of a disease, information on people with a disease, information on a disease factor, and information on a movement path of the person with a disease.

The information collector 102 may collect information on the geofence region through an environmental information providing server. For example, the environmental information providing server may be an external server, such as the Meteorological Administration, Fire Protection Agency, Air Korea, National Crop Disease and Pest Management System, National Air Pollution Information Management System, National Fine Dust Information Center, Water Environment Information System, and National Water Resources Management Comprehensive Information System, which provides various types of environmental information. The information collected through the information collector 102 may include environmental information associated with the geofence region, information on a weather condition, such as yellow dust, fine dust, ultrafine dust, ozone, ultraviolet rays, temperature, and atmospheric pressure, information on a change in the water quality, and information on a pest control condition, such as pests or rats. The information collector 102 may also include special report information to be provided in real time. For example, the special report information may include special report information provided in real time such as a pest outbreak, a rat outbreak, a fire outbreak, a yellow dust special report, a fine dust special report, an ultrafine dust special report, a strong wind special report, a storm special report, a heavy rain special report, a heavy snow special report, a dry weather special report, a storm surge special report, a typhoon special report, a heat wave special report, a cold wave special report, a radon occurrence, a VOCs occurrence, a harmful substance leakage special report, a radioactivity occurrence, an infectious disease occurrence, and a natural disaster occurrence. Additionally, the environmental information is regional information on the geofence region and may include location information including a latitude and longitude coordinate, map information, etc.

The information collector 102 may collect information of one or more surveillance zones set in the geofence region. The surveillance zones are arbitrary zones set in connection with the management area, and the information collector 102 may collect geographical information on locations of the surveillance zones, relative locations between the surveillance zones for the management area, and information on the environment of the surveillance zones.

The information collector 102 may collect information of a management apparatus installed on the management area in addition to the environmental information. For example, the information of the management apparatus may include operation information of the management apparatus 12, location information, operation functions, operation time, operation period, operation frequency, operation patterns, maintenance and replacement information of the management apparatus, software version information of the management apparatus, etc. In an embodiment, the information collector 102 may receive information on the environmental change in the management area through the management apparatus 12. For example, the information collector 102 may detect the environmental change event and the environmental information of the management area on which the management apparatus 12 is installed, through the management apparatus 12.

In an embodiment, the environmental analyzer 103 may analyze the environmental condition of the management area based on the collected information. The environmental analyzer 103 may analyze the environmental condition of the management area and may provide the analysis result on the environment of the management area. For example, the environmental analyzer 103 may analyze the environmental condition of the management area based on the environmental information in the set geofence region. For example, the environmental analyzer 103 may analyze the influence of the environment of the geofence region on the environmental condition of the management area. In an embodiment, the environmental analyzer 103 may analyze and determine an environmental grade of the management area in various ways. In an embodiment, the communicator 104 may transmit information according to the analysis result of the environmental analyzer 103 externally. For example, the communicator 104 may transmit management information according to the environmental condition of the management area to the device 11. The communicator 104 may transmit management information determined according to the location information of the device 11 to the device 11. In this case, the management information may include the action guidance required for a user or a work order for a manager of the management area.

In an embodiment, when the work order for the manager is transmitted through the device 11, the communicator 104 may transmit the work order to the device 11 that is adjacent to the management area. For example, when a work order required according to the environmental condition of the management area is selected, the communicator 104 may recognize the location of the device 11 in the geofence region and may transmit, among the recognized devices 11, the work order to the device 11 that is adjacent to the management area. In this case, the communicator 104 may receive, from the device 11, information on whether a work is performed in the management area. When work performance information is received, the environmental analyzer 103 may reanalyze the environmental condition of the management area through feedback.

The communicator 104 may transmit the management information according to the environmental condition of the management area to the management apparatus 12. In this case, the management information transmitted to the management apparatus 12 may include a control command for the operation of the management apparatus 12.

The communicator 104 may transmit information on the environmental condition of the management area based on the location information of the device 11 or the management apparatus 12. Hereinafter, it is assumed and described that the communicator 104 transmits the management information to the device 11.

When the location of the device 11 is in the set geofence region, the communicator 104 may transmit the management information on the environmental condition of the management area in the geofence region. When the management information is transmitted, the communicator 104 may select and transmit management information to be transmitted to the device 11 according to the relative location between the device 11 and the management area.

For example, a plurality of pieces of management information may be generated depending on the relative location between the device 11 and the management area. For example, when the air quality state of the management area is analyzed as a dangerous state, a high level of behavioral guidance, for example, the user behavioral guidance, such as wearing a mask, may be required when the device 11 is adjacent to the management area by a predetermined range or more. That is, the communicator 104 may transmit, among the plurality of pieces of management information, management information matching the location of the device 11 to the device 11.

The control server 10 may set a dynamic geofence for the device 11 based on the location information of the device 11 received through the communicator 104. The dynamic geofence region may change depending on the location of the device 11. The control server 10 may monitor an overlapping state between the dynamic geofence region and the geofence region of the management area in real time through the communicator 104.

When the dynamic geofence region overlaps the geofence region of the management area, the control server 10 may transmit the management information according to the environmental condition of the management area to the device 11. The control server 10 may generate a plurality of pieces of management information defined according to the degree of overlap between the dynamic geofence region and the geofence region of the management area. In this case, the control server 10 may transmit management information matching the degree of overlap between the dynamic geofence region and the geofence region of the management area to the device 11. Since the geofence region of the management area may be formed in various forms, different pieces of management information may be required even when the geofence region is away from the management area by the same distance. When management information is selected through the degree of overlap between the dynamic geofence region and the geofence region of the management area, required management information may be more accurately selected according to the location of the device 11.

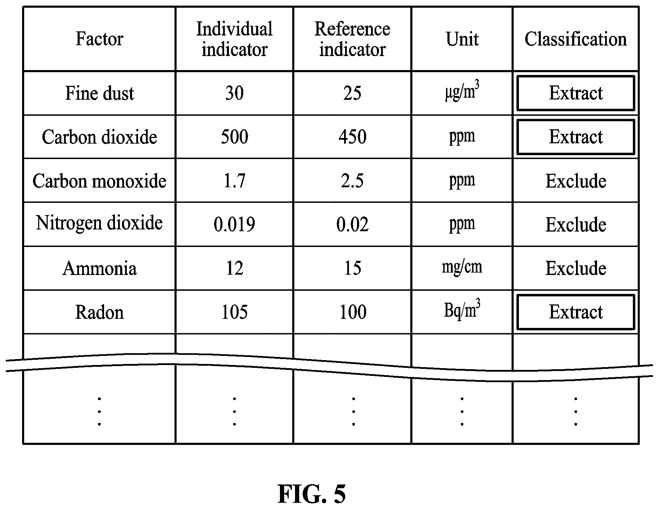

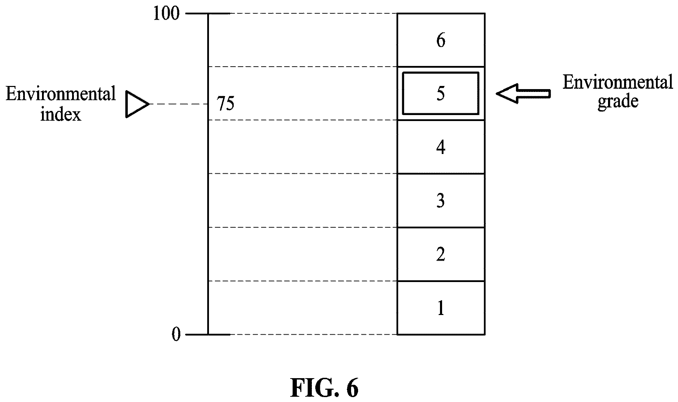

FIG. 5 is a diagram illustrating an environmental condition analysis method according to an embodiment, and FIG. 6 is a diagram illustrating an environmental condition analysis method according to an embodiment.

Referring to FIGS. 5 and 6, in an embodiment, the environmental analyzer 103 may classify information collected in relation to an environmental condition of a management area into a plurality of factors. The environmental analyzer 103 may analyze the environment of the management area through a combination of the classified factors. The environmental analyzer 103 may generate an individual indicator by applying an individual weight to each of the classified factors. The environmental analyzer 103 may extract at least some of the plurality of factors based on a numerical value of the generated individual indicator. The analysis result may be generated according to a combination of the extracted factors.

The environmental analyzer 103 may set a reference indicator for each classified factor. The environmental analyzer 103 may select a factor to be extracted by comparing the individual indicator of the classified factors with the set reference indicator. In this case, the reference indicator for each factor may be determined according to a characteristic of the management area. The characteristic of the management area may include a geographical location of the management area, a size of the management area, a purpose of use of the management area, the number of residents in the management area, and information on the number of people entering the management area. For example, when the individual indicator of the classified factor exceeds the set reference indicator, the environment analyzer 103 may extract a corresponding factor and may generate the analysis result for the environmental condition of the management area through a combination of the extracted factors.

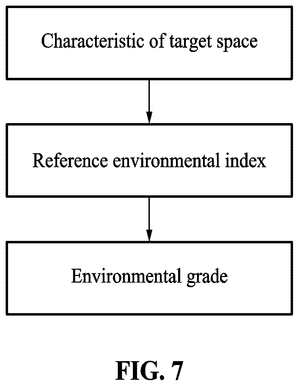

For example, as shown in FIG. 7, when an environmental analyzer analyzes the air quality environment, the environmental analyzer may classify factors forming the air quality into a plurality of factors such as fine dust, carbon dioxide, and carbon monoxide. The environmental analyzer may generate an individual indicator quantified for each factor based on collection information on the classified factors. In this case, the environmental analyzer may set a reference indicator for each factor, and the reference indicator may be defined according to the environment of the management area. For example, when the management area is a house, a higher level of air quality must be required compared to when the management area is a factory, so the reference indicator may be set relatively low. In addition, when the management area is a school, the air quality requirements during the morning hours when students are present may be higher than the air quality requirements during the night hours when there are no students. In this case, the reference indicator may be set lower than the morning hours.

The environmental analyzer 103 may generate management information required for the environmental condition of the management area through a combination of the extracted factors. For example, when a carbon dioxide factor is extracted from the management area, a ventilation action may be required in the management area, while when a fine dust factor is extracted from the management area, a window closing action may be required in the management area. The environmental analyzer 103 may generate management information that is suitable for the environmental condition of the management area through a combination of the extracted factors.

The environmental analyzer 103 may evaluate an environmental grade according to the environmental condition of the management area. For example, the environmental analyzer 103 may evaluate the environmental condition of the management area with one environmental grade of the set reference environmental grades. In this case, the reference environmental grades may be defined according to the environmental requirements of the management area. For example, when the management area requires a higher level of environmental condition, for example, when the management area is a hospital, a higher hygiene environment may be required than when the management area is a subway. In this case, since the reference environmental grade of a hospital requires more detailed environmental grade classification than other areas, more reference environmental grades may be set.

The environmental analyzer 103 may select the environmental grade of the management area through a quantified environmental index. For example, the environmental analyzer 103 may generate the quantified environmental index by evaluating the environmental condition of the management area. The environmental analyzer 103 may classify the numerical range of the environmental index, that is, the numerical range of the minimum and maximum values, by matching the numerical range of the environmental index to the plurality of reference environmental grades. The matching of the numerical range of the environmental index to the reference environmental grades may be individually defined depending on the characteristic of the management area.

The environmental analyzer 103 may evaluate the environmental index through the environment of the management area and the environment in the geofence region. The environmental analyzer 103 may generate a basic index quantified for the environmental condition of the management area based on the environmental information of the management area. The environmental analyzer 103 may generate a correction index by quantifying the influence of the environment in the set geofence region on the environmental condition of the management area. In this case, the environmental analyzer 103 may finally generate an environmental index for the environmental condition of the management area by correcting the basic index through the generated correction index.

The correction index may be generated based on the environmental information in the geofence region other than the management area. For example, the environmental analyzer 103 may generate the correction index through environmental information of one or more surveillance zones set in the geofence. For example, when the management area is a food factory, the environmental analyzer 103 may set a chemical plant on the geofence as a surveillance zone. The environmental analyzer 103 may collect information on the environment of the chemical plant, for example, information on exhaust fumes and information on chemical emissions generated from the chemical plant and may analyze the influence of the surveillance zone on the environmental condition of the management area based on the collected information. In this case, the correction index may be generated by comprehensively considering a distance between the surveillance zone and the management area, a geographical location of the surveillance zone, and environmental information of the surveillance zone.

Furthermore, the correction index may be generated through information of an environmental event occurring in the geofence region. The environmental event may be, for example, a contamination source in the geofence. The environmental analyzer 103 may recognize the occurrence of the environmental event in the geofence region and may generate the correction index by quantifying the influence of the recognized environmental event on the environmental condition of the management area. For example, when forest fire occurs in the geofence region, the environmental analyzer 103 may recognize the forest fire as an environmental event, quantify a change in the air quality state in the management area according to the influence of the forest fire, and generate the correction index.

The environmental analyzer 103 may generate a management order for the environmental condition of the management area based on the analysis result. For example, the environmental analyzer 103 may set a management order matching each reference environmental grade of the management area and may select a matching management order according to the environmental grade of the management area.

The environmental analyzer 103 may reselect, from among the selected management orders, a management order to be transmitted to the management apparatus. The reselecting of management order may be performed based on the characteristic of the management apparatus. For example, when the management apparatus 12 is an apparatus that manages the air quality in the management area, the environmental analyzer 103 may reselect a management order for the air quality and may transmit the management order to the management apparatus 12.

Furthermore, the environmental analyzer 103 may evaluate an expected environmental condition of the management area over time through the environmental information in the geofence region. The environmental analyzer 103 may determine a management order for a predetermined time according to the analysis result of the expected environmental condition.

FIG. 7 is a flowchart of generating a reference environmental index and an environmental grade, according to an embodiment.

Referring to FIG. 7, in an embodiment, the environmental analyzer 103 may generate a reference environmental index and an environmental grade for a management area. The environmental index may refer to a numerical value representing an environmental condition of the management area. For example, the environmental index may have a great value as the environmental condition of the management area deteriorates. The reference environmental index may refer to a numerical value that is a reference for the environmental condition of the management area. That is, the reference environmental index may refer to a numerical value that is a reference for evaluating the environmental condition from a numerical value of the environmental index. The reference environmental index may be set differently for each management area by considering the characteristic of the management area. For example, in generating the reference environmental index, the environmental analyzer 103 may consider environmental information of a target space or personal information of a user who stays in the management area.

The environmental information of the management area may include a location, a purpose of use, and a scale of the management area, and a location, a purpose of use, and a scale of a facility around the management area. Depending on the environmental information of the management area, the reference for managing the environmental condition of the management area may vary. For example, the management reference of the environmental condition required for each management area may vary depending on whether the management area includes a school, a hospital, a residence, or a factory. For example, when the management area includes a residence, a higher management condition may be required than when the management area includes a factory, and a lower management condition may be required than when the management area includes a hospital. In addition, the management reference of the environmental condition required for each management area may vary depending on whether the management area includes a certain natural environment, such as mountains, fields, forests, rivers, and the sea. Furthermore, the reference of the environmental condition required for the management area may vary depending on personal information of a user in the management area. For example, when the management area includes a kindergarten, a higher reference of the environmental condition may be required because the main users in the management area are children of a lower age group.

The environmental analyzer 103 may generate at least one reference environmental index. For example, the environmental analyzer 103 may generate first, second, and third reference environmental indices. The environmental analyzer 103 may generate at least two or more environmental grades with at least one reference environmental index as a numerical boundary. For example, the environmental analyzer 103 may generate first, second, third, and fourth environmental grades with the first, second, and third reference environmental indices as a respective numerical boundary. For example, the first environmental grade may correspond to a section that is less than the first reference environmental index, the second environmental grade may correspond to a section that is greater than or equal to the first reference environmental index and less than the second reference environmental index, the third environmental grade may correspond to a section that is greater than or equal to the second reference environmental index and less than the third reference environmental index, and the first environmental grade may correspond to a section that is greater than or equal to the third reference environmental index. For example, the first, second, third, and fourth environmental grades may refer to a comfort grade, an appropriate grade, a warning grade, and a dangerous grade, respectively. However, this is an example, and various numbers of reference environmental indices and environmental grades may be generated.

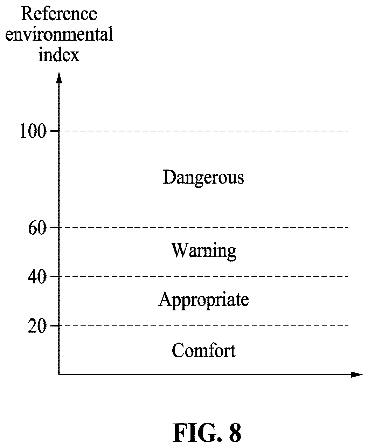

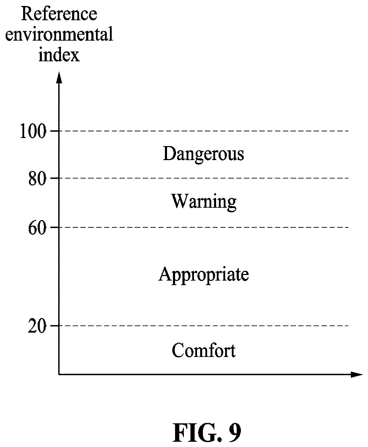

FIGS. 8 and 9 are graphs illustrating a reference environmental index and an environmental grade, according to an embodiment.

FIG. 8 shows an example of a reference environmental index and an environmental grade when a management area is a hospital. For example, when the management area includes a hospital, more stringent management of an environmental condition of the management area may be required. In this case, the reference environmental index for the management area including a hospital may be set strictly. For example, as shown in FIG. 8, the reference environmental index may be set to 20, 40, and 60, in which a reference environmental index that is less than 20 may be classified into a comfort grade, a reference environmental index that is greater than or equal to 20 and less than 40 may be classified into an appropriate grade, a reference environmental index that is greater than or equal to 40 and less than 60 may be classified into a warning grade, and a reference environmental index that is greater than or equal to 60 and less than 100 may be classified into a dangerous grade. In another example, when the geofence of the management area includes an area requiring a safe environmental condition, such as a kindergarten where infants and toddlers are located, a food factory requiring a high level of cleanliness, or a semiconductor factory requiring a high environmental condition, strict setting of the reference environmental index and the environmental grade may be required, as shown in FIG. 8.

FIG. 9 shows an example of a reference environmental index and an environmental grade when a management area includes a residence. For example, when the management area includes a residence or a residence in the geofence of the management area, an environmental condition of the management area may be managed relatively smoothly compared to FIG. 9. For example, as shown in FIG. 9, the reference environmental index may be set to 20, 60, and 80, a reference environmental index that is less than 20 may be classified into a comfort grade, a reference environmental index that is greater than or equal to 20 and less than 60 may be classified into an appropriate grade, a reference environmental index that is greater than or equal to 60 and less than 80 may be classified into a warning grade, and a reference environmental index that is greater than or equal to 80 and less than 100 may be classified into a dangerous grade.

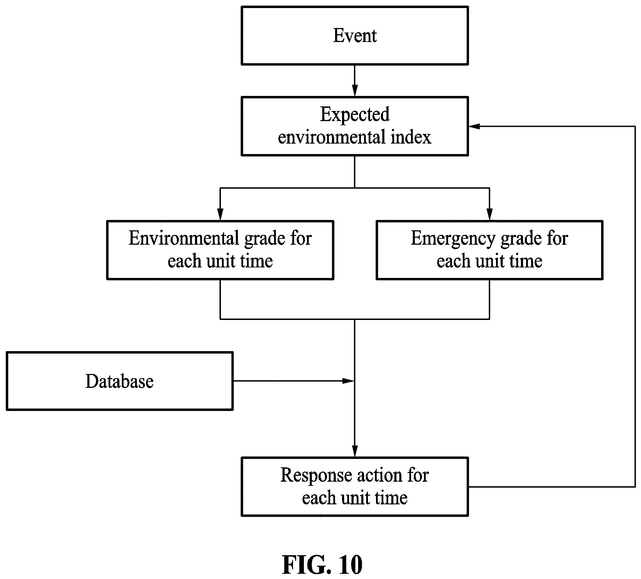

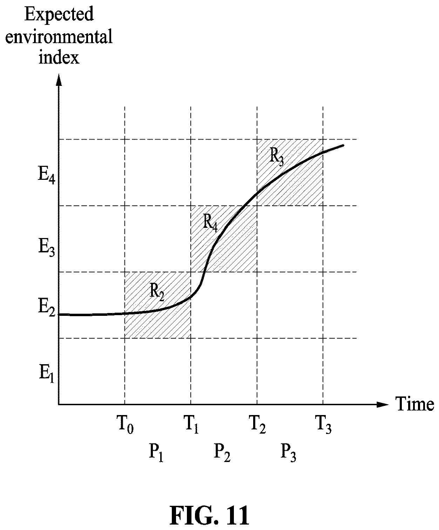

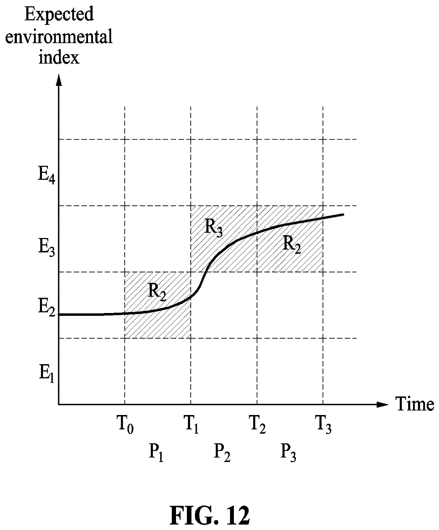

FIG. 10 is a flowchart of a process of selecting a response action, according to an embodiment, and FIGS. 11 and 12 are graphs illustrating an expected environmental index according to an embodiment.

Referring to FIG. 10, the environmental analyzer 103 may generate an expected environmental index according to the occurrence of an event, assign an environmental grade for each unit time and an emergency grade for each unit time, and select a response action for each unit time based on this.

When the occurrence of an event is detected, the environmental analyzer 103 may generate an expected environmental index of a management area according to the occurrence of the event. In an embodiment, a range where the event is detected may be set to a geofence including the management area. However, this is an example, and the range where the event is detected may extend to a geofence that is adj acent to the geofence including the management area. In an embodiment, the expected environmental index generated by the environmental analyzer 103 may refer to a prediction result obtained by quantifying the influence of the event occurring in the geofence of the management area or the influence of the event occurring in the adjacent geofence in the geofence including the management area.

Referring to FIGS. 11 and 12, the environmental analyzer 103 may generate an expected environmental index as a function for the time. In an embodiment, the expected environmental index may change over time, so the expected environmental index may be a type of time-dependent function with time as a variable.

In an embodiment, the environmental analyzer 103 may generate the expected environmental index over time by considering one of a type, a scale, a time point of occurrence of an event, and a distance between an occurrence point of the event and a management area. For example, depending on the type of event, the expected environmental index may be generated differently. In an embodiment, when the scale of the event is big, the expected environmental index may be generated to have a larger value, and when the scale of the event is small, the expected environmental index may be generated to have a relatively small value. In an embodiment, the expected environment index may be set differently depending on whether the event occurs during the daytime when a user is most active or during the early morning hours when a user is less active. In an embodiment, a value of the expected environmental index may be generated to be high as the event occurs adjacent to the management area, and a value of the expected environmental index may be generated to be low as the event occurs farther from the management area.

In an embodiment, the environmental analyzer 103 may divide the generated expected environmental index for each unit time. For example, the unit time may be defined as the constant unit time, such as 1 hour or 30 minutes. The environmental analyzer 103 may divide the expected environmental index into the defined unit time, assign an environmental grade and an emergency grade for each unit time, and select a response action for each unit time.

In an embodiment, the environmental analyzer 103 may determine an environmental grade corresponding to the expected environmental index for each unit time and may assign the environmental grade for each unit time. For example, the environmental analyzer 103 of the control server 10 may assign the environmental grade based on an average value of the expected environmental index during the unit time. For example, referring to FIGS. 11 and 12, the environmental analyzer 103 may evaluate which grade the average value of the expected environmental index corresponds to for each unit time P1, P2, and P3 and may assign the environmental grade for each unit time. For example, referring to FIG. 11, an environmental grade E2 may be assigned at the unit time P1, an environmental grade E3 may be assigned at the unit time P2, and an environmental grade E4 may be assigned at the unit time P3. In contrast, referring to FIG. 12, the environmental grade E2 may be assigned at the unit time P1, the environmental grade E3 may be assigned at the unit time P2, and the environmental grade E3 may be assigned at the unit time P3. Alternatively, the environmental analyzer 103 may assign the environmental grade to the management area based on the maximum value, the minimum value, or the intermediate value of the expected environmental index during the unit time.

In an embodiment, the control server 10 (e.g., the environmental analyzer 103) may calculate a slope of the expected environmental index for each unit time and may determine a level of urgency for each unit time according to the magnitude of the slope. For example, the expected environmental index may have different slopes for each unit time. When the slope of the expected environmental index is large, it may be understood that the environmental condition is rapidly deteriorating, and when the slope of the expected environmental index is relatively small, it may be understood that the environmental condition is deteriorating relatively slowly. For example, when the slope of the expected environmental index is large, the level of urgency may be understood as high, and when the slope is small, the level of urgency may be understood as relatively low.

In an embodiment, the control server 10 may calculate the slope of the expected environmental index based on the slope of the intermediate value of the unit time. For example, in the case of the unit time P 1, the control server 10 may calculate a slope of an expected environmental index corresponding to the time of (T0 + T1)/2. In addition, in the case of the unit time P1, the control server 10 may secure the level of urgency by calculating a straight-line slope between an expected environmental index corresponding to the time of T0 and an expected environmental index corresponding to the time of T1.

In an embodiment, the control server 10 may assign the emergency grade based on the slope of the environmental index over time. For example, depending on the magnitude section of the slope, the level of urgency of the management area may be evaluated as a first emergency grade R1, a second emergency grade R2, a third emergency grade R3, and a fourth emergency grade R4. The control server 10 may determine the expected environmental index for each unit time and may assign the emergency grade for each unit time through the slope of the environmental index over time. For example, referring to FIG. 11, the emergency grade R2 may be assigned at the unit time P1, the emergency grade R3 may be assigned at the unit time P2, and the emergency grade R2 may be assigned at the unit time P3. For example, when the slope of the expected environmental grade has a negative value, the emergency grade R1 may be assigned.

In an embodiment, the control server 10 (e.g., the environmental analyzer 103) may select a necessary response action by comparing the reference environmental index with the expected environmental index. Specifically, the response action may be selected for each unit time. The response action may include at least one of environmental management through the management apparatus 12, the provision of a management service required for the management area, and the behavioral guidance required for a user in the management area. In the case of environmental management through the management apparatus 12, the control server 10 may remotely operate the management apparatus 12 through the communicator 104 and may manage the environment of the management area. In the case of provision of the management service required for the management area, the control server 10 may send, through the communicator 104, a notification to a manager near the management area to provide a management service required for the management area. In an embodiment, in the case of behavioral guidance required for the user in the management area, the control server 10 may provide, through the communicator, information on the behavioral guidance required for the user registered in the management area. In another example, the control server 10 may obtain information of a user in the geofence including the management area and may provide information on the behavioral guidance required for the management area in the geofence to the user determined to be located in the geofence. The control server 10 may provide the behavioral guidance required for a user through an application, a messenger, a text message, a phone call, a notification sound, and a display.

The control server 10 may include a database in which a plurality of response actions is listed and stored for each environmental grade. In the database, possible response actions may be listed and stored for each type of event. For example, in the case of fine dust occurrence, as possible response actions, operating an air purifier, providing an air purifier filter replacement service, stopping the operation of a ventilator, closing windows, providing a fine dust mask, and suggesting wearing a fine dust mask may be stored. The plurality of response actions may be differentially set in type, intensity, and frequency for each environmental grade. The control server 10 may assign the environmental grade for each unit time by comparing the reference environmental index with the expected environmental index for each unit time and may select a response action matching the assigned environmental grade for each unit time by considering the type of event. For example, in the case of FIG. 11, the environmental grade at the unit time P1 is E2, so a response action matching the type of event occurring in the database and the environmental grade E2 may be selected as the response action for P1.

In an embodiment, the control server 10 may additionally consider the emergency grade in selecting the response action. For example, the control server 10 may select the response action for each unit time by comprehensively considering the environmental grade and the emergency grade for each unit time. In the database, the response action based on a combination of the environmental grade and the emergency grade may be stored in a matrix form.

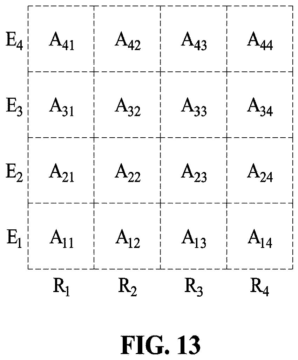

FIG. 13 is a response action matrix according to a combination of an environmental grade and an emergency grade, according to an embodiment. For example, referring to FIG. 13, when the environmental grade is E1, and the emergency grade is R1, A11 may be matched as a response action, and when the environmental grade is E1, and the emergency grade is R2, A12 may be matched as a response action. The matrix of FIG. 13 described above may be set for each type of event. For example, using the matrix based on a combination of the environmental grade and emergency grade, more precise and complex response action may be selected compared to selecting response action by considering only the environmental grade. For example, even when the environmental grade is very low, such as E4, a required response action may be selected differently when the emergency grade is low, such as R1, and when the emergency grade is high, such as R4. For example, in the case of FIG. 11, the environmental grade at the unit time P1 is E2, and the emergency grade is R2, so a response action matching the matrix of FIG. 13 may be selected as A22. In contrast, since the environmental grade at the unit time P2 of FIG. 8 is E3, and the emergency grade is R4, a response action matching the matrix of FIG. 13 may be selected as A34.

In an embodiment, when a response action is applied, the control server 10 may reflect feedback accordingly. The control server 10 may regenerate an expected environmental index over time after the time point when the response action is applied. The control server 10 may quantify an event situation and the influence of the selected response action at the corresponding time point and may regenerate the expected environmental index over time. The control server 10 may update the environmental grade for each unit time, the emergency grade for each unit time, and the response action for each unit time in the same manner as described above, using the regenerated expected environmental index.

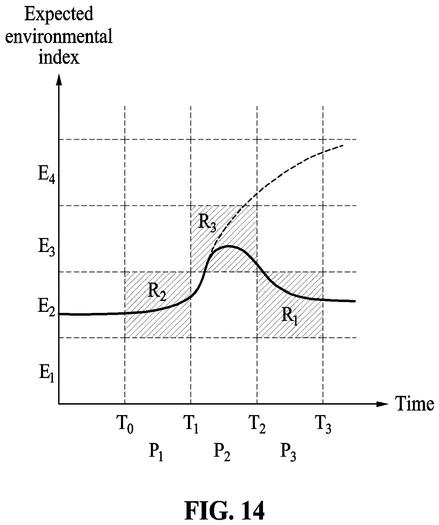

FIG. 14 is a graph in which the expected environmental index according to FIG. 11 is regenerated according to the application of a response action. Specifically, in the situation of FIG. 11, FIG. 14 is a graph illustrating that the expected environmental index is regenerated after the time point of T1, assuming that a response action at the time point of T1 is applied. Referring to FIG. 11, before the response action, a matching response action is A34 as the environmental grade at the unit time P2 is E3, and the emergency grade is R4, but referring to FIG. 14, it may be seen that the matching response action is changed to A33 as the environmental grade at the unit time P2 is E3, and the emergency grade is adjusted to R3 due to the application of the response action at T1. That is, the control server 10 may update the environmental grade, the emergency grade, and the response action at P2 to E3, R3, and A33, respectively, by reflecting feedback according to the response action. Likewise, the control server 10 may update the environmental grade, the emergency grade, and the response action at P3 to E2, R1, and A31, respectively. For example, when the response action is applied at T2 again, the control server 10 may repeatedly regenerate the expected environmental index and may update the environmental grade, the emergency grade, and the response action, respectively, by feeding back the response action after the time point of T2. According to such a configuration, it may be possible to determine an optimal response action every hour by reflecting the occurrence of an event and the corresponding response action at any time, and as a result, it may be possible to effectively respond to the occurrence of the event.

Hereinafter, an example of a method in which the environment management system 1 sets a geofence to manage the environment is described.

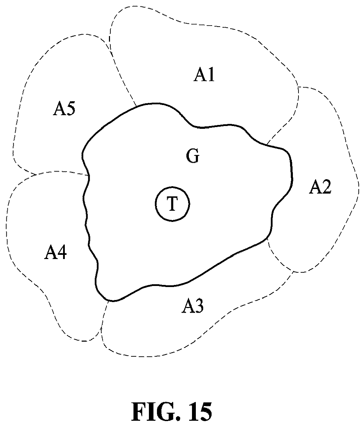

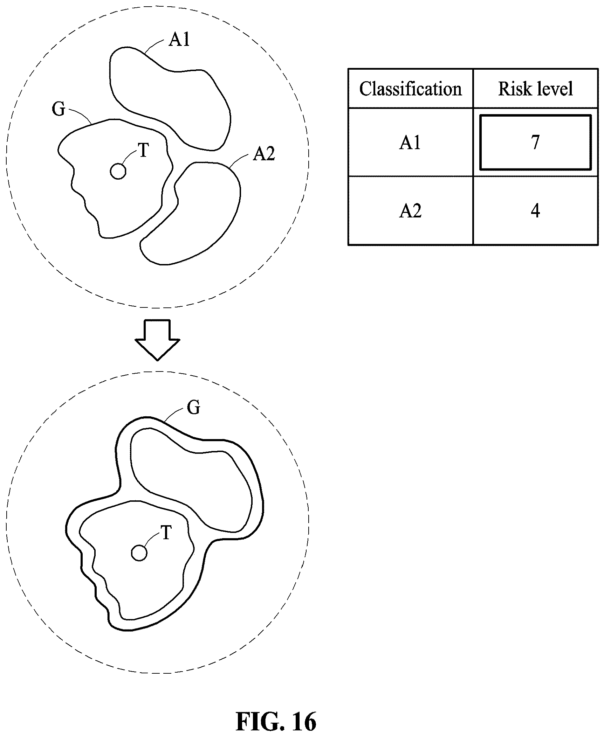

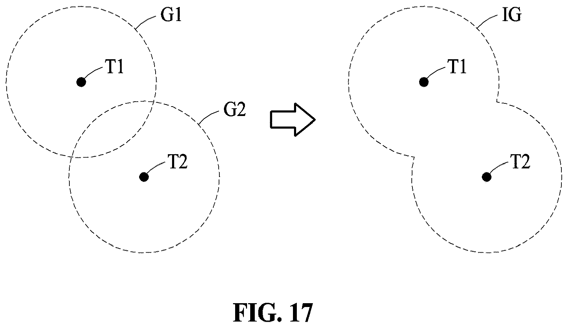

FIG. 15 is a diagram illustrating a geofence according to an embodiment, FIG. 16 is a diagram illustrating a method of setting a geofence region, according to an embodiment, and FIG. 17 is a diagram illustrating a form in which a geofence is set for a plurality of management areas, according to an embodiment.

An example of a method of setting a geofence is described with reference to FIGS. 15 to 17. Referring to FIG. 15, the environment management system 1 may set a geofence region based on one management area. The geofence region may be set in a set radius range centered on the management area, as shown in FIG. 3, but may be formed to have an arbitrary form, as shown in FIG. 6. For example, the geofence region may be set in units of administrative districts expressed on a map or may be set considering geographic factors such as an altitude, river, and the sea. The environment management system 1 may set the geofence region and may divide and manage a surrounding area of the set geofence into a plurality of areas.

Referring to FIG. 16, the environment management system 1 may reset the set geofence region in real time. The environment management system 1 may collect environmental information of the surrounding area of the set geofence and may evaluate, through the collected information, the influence of the environment of the surrounding area on the geofence region with a quantified risk level. The environment management system 1 may reset the geofence region by comparing a risk level of a certain area around the geofence with a set reference risk level. For example, as shown in FIG. 16, the environment management system 1 may evaluate a risk level of a first area A1 and a second area A2 around the previously set geofence. When the reference risk level is 6, the environment management system 1 may reset the geofence region so that the first area in which the evaluated risk level exceeds the reference risk level is included in the geofence region. In contrast, the second area A2 in which the risk level is evaluated as 4 may be excluded from the geofence region.

According to this method, since the geofence region of the management area is set to have a more complex form, more precise environmental analysis based on a geofence may be performed.

Referring to FIG. 17, the environment management system 1 may set a geofence for a plurality of management areas. The environment management system 1 may individually set the geofence for each management area. In this case, a range of a geofence region for each management area may be set differently. Since the geofence region for each management area is set in relation to an environmental condition of the management area, when the plurality of management areas overlap each other, the environment of the plurality of management areas may be considered to affect each other. When the geofence regions set for each of the plurality of management areas overlap each other, the environment management system 1 may integrate a plurality of overlapping geofence regions and may set the plurality of overlapping geofence regions as one integrated geofence (IG).

In this case, the environment management system 1 may efficiently analyze the environmental condition of each management area by considering the mutual influence of the environment of the plurality of management areas in the IG region. Furthermore, since each management area requires environmental conditions with different references, an environmental grade may be individually defined for each management area. Accordingly, each piece of management information may also be generated according to the environmental condition of each management area.

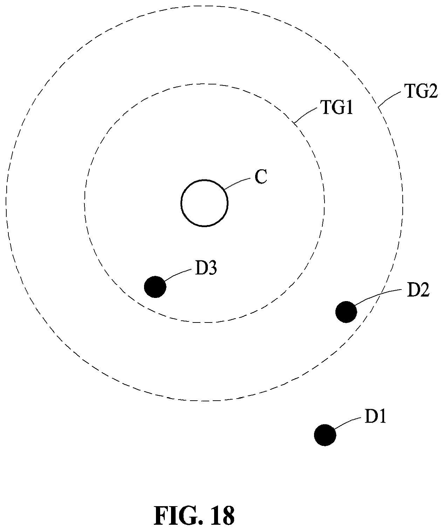

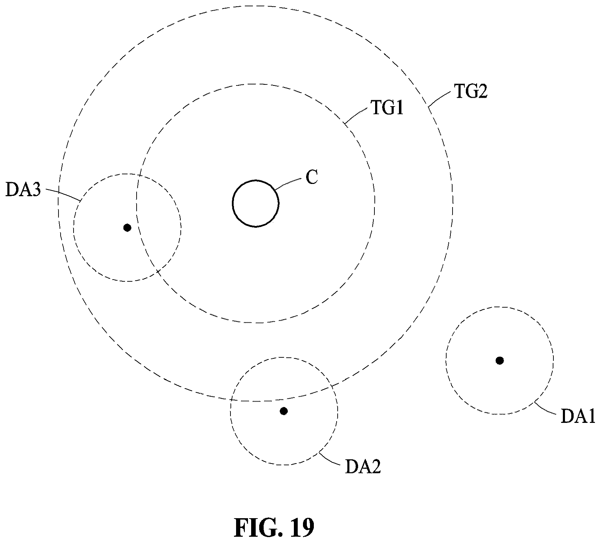

FIGS. 18 and 19 are diagrams illustrating a method of setting a geofence, according to an embodiment.

Referring to FIGS. 18 and 19, the environment management system 1 may set a target geofence based on a contamination source.

The environment management system 1 may evaluate the degree of influence of a surrounding environment due to the contamination source according to a distance from the contamination source and may set the target geofence based on the evaluation result. For example, the environment management system 1 may evaluate the influence of the contamination source on the environment with a quantified contamination level. The environment management system 1 may set a target geofence region by comparing the contamination level evaluated for a certain area with a set reference contamination level. The evaluating of the contamination level for a certain area may be performed based on geographical information of the certain area, a relative distance from the contamination source, a congestion level of the certain area, environmental information, etc.

For example, when the contamination level of a certain area is above a reference contamination level, the environment management system 1 may include a corresponding area in the target geofence region, and when the contamination level of a certain area is below the reference contamination level, the environment management system 1 may exclude the corresponding area from the target geofence region. According to this method, the target geofence region may be set to have a complex form based on geographical information of a surrounding area of the contamination source.

The environment management system 1 may partition the target geofence region into a plurality of sub-regions according to the evaluated contamination level. For example, as shown in FIG. 18, the environment management system 1 may partition the target geofence region into a first sub-region TG1 with a first contamination level and a second sub-region TG2 with a second contamination level.

The environment management system 1 may analyze an environmental condition of a management area in the set target geofence region. The environmental condition of the management area may be analyzed based on environmental information of the target geofence region, and for example, the environmental condition of the management area may be analyzed through a degree of influence of the contamination source. When the management area is in a certain sub-region, the environment management system 1 may evaluate the environmental condition of the management area based on the contamination level of the sub-region where the management area is located.

The environment management system 1 may transmit management information according to the analysis result of the environmental condition of the management area to the management apparatus 12 or the device 11. The environment management system 1 may control the operation of the management apparatus 12 by transmitting environmental information of the management area analyzed according to the environmental information in the target geofence region to the management apparatus 12. The environment management system 1 may transmit management information required according to the location of the device 11 based on location information of the device 11.

When the device 11 is in the target geofence region, the environment management system 1 may transmit the environmental information of the target geofence region to the device 11. In this case, the target geofence may transmit, to the device 11, information on the sub-region where the device 11 is located. For example, as shown in FIG. 18, when a first device D1 is located outside of the target geofence region, the environment management system 1 may not transmit management information to the first device D1. When a second device D2 is in the second sub-region TG2, the environment management system 1 may transmit, to the second device D2, environmental information of the second sub-region TG2 or management information on the environmental condition of the management area in the second sub-region TG2. In this case, since the sub-regions where the second device D2 and a third device D3 are located are different, information transmitted to the second device D2 and the third device D3 may be different.

Referring to FIG. 19, the environment management system 1 may determine information to be transmitted to the device 11 by setting a dynamic area for the device 11. The environment management system 1 may set a predetermined range as the dynamic area centered on a location of the device 11 and may determine the information to be transmitted to the device 11 according to an overlapping state between the dynamic area and the target geofence.

The environment management system 1 may transmit, to the corresponding device 11, information in the target geofence region, for example, the environmental information of the target geofence region or the information of the management area only when the dynamic area overlaps the target geofence.

When a dynamic area DA2 of the device 11 overlaps the target geofence, the environment management system 1 may transmit, to the device 11 DA2, information corresponding to an overlapping sub-region TG2, for example, environmental information of the sub-region or environmental condition information of the management area in the sub-region.

When a dynamic area DA3 of the device 11 overlaps a plurality of sub-regions TG1 and TG2 at the same time, the environment management system 1 may regenerate information to be transmitted to the device 11 based on environmental information of each of the overlapping sub-regions.

Hereinafter, an environment management method based on a geofence according to an embodiment is described. In describing the environment management method, a description overlapping the description provided above is omitted, and the same terms are understood as performing the same functions unless otherwise described.

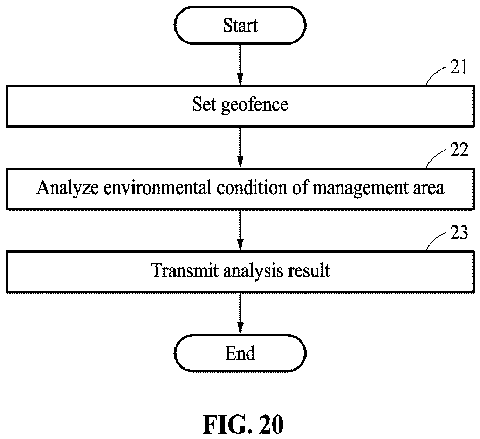

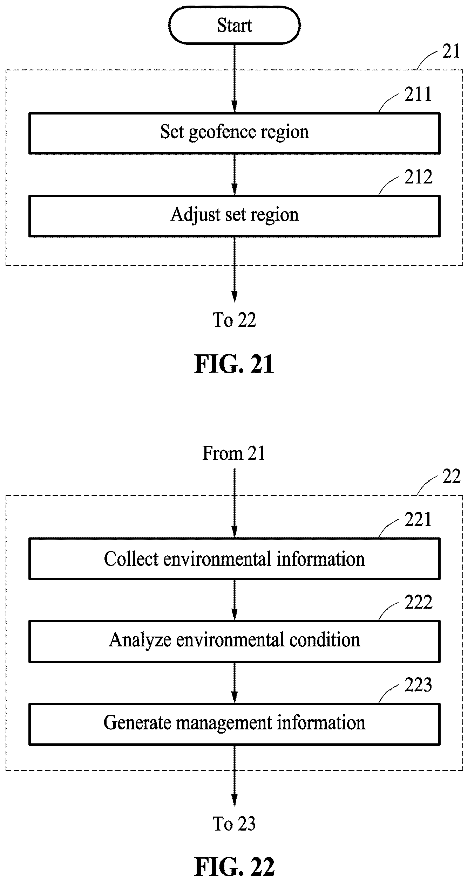

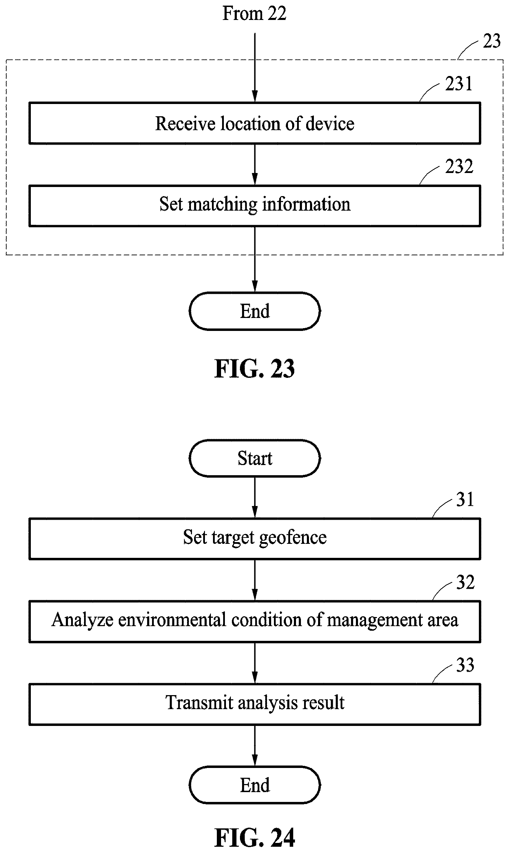

FIG. 20 is a flowchart of an environment management method according to an embodiment, FIG. 21 is a flowchart of setting a geofence, according to an embodiment, according to an embodiment, FIG. 22 is a flowchart of analyzing the environment, according to an embodiment, and FIG. 23 is a flowchart of transmitting information, according to an embodiment.

Referring to FIGS. 20 to 23, an environment management method based on a geofence according to an embodiment may manage the environment of a management area based on environmental information of a geofence region including the management area. The environment managed through the environment management method may relate to at least one of the air quality environment, water quality environment, pest control environment, hygiene environment, and disease environment in the management area.

The environment management method may include operation 21 of setting a geofence, operation 22 of analyzing an environmental condition of the management area, and operation 23 of transmitting the analysis result.

Operation 21 of setting the geofence may include operation 221 of setting a geofence region and operation 222 of adjusting the set region.

Operation 221 of setting the geofence region may set a predetermined region based on the management area as the geofence region for the management area. In this case, the setting of the geofence region may be based on a characteristic of the management area. The characteristic of the management area may include at least one of geographical information of the management area, an area, a purpose of use, a congestion level, the number of residents, and information on the number of people entering.

Operation 222 of adjusting the set region may readjust a range of the geofence region according to a set condition. For example, operation 222 of adjusting the set region may be performed by evaluating a risk level of an area outside of the previously set geofence region. The adjusting of the set region may evaluate the influence of the environment of a certain area outside of the geofence on the environmental condition of the management area with a quantified risk level and may reset the geofence region including the certain area when the evaluated risk level exceeds a reference risk level.

Operation 22 of adjusting the set region may reset the geofence region by integrating a plurality of geofence regions. For example, the adjusting of the set region may expand a range of the existing geofence region or may set a new geofence region by integrating the plurality of overlapping geofence regions when the geofence regions set for each of a plurality of management areas overlap or are adjacent to each other.

Operation 22 of analyzing the environmental condition of the management area may analyze the environmental condition of the management area based on environmental information in the geofence region. Operation 22 of analyzing the environmental condition may include operation 221 of collecting environmental information, operation 222 of analyzing the environmental condition, and operation 223 of generating management information.

Operation 221 of collecting the environmental information may collect environmental information in the set geofence region. The information collected from operation 221 may be information related to the environmental condition of the management area.

Operation 221 of collecting the environmental information may collect information on one or more surveillance zones set in the geofence region. The surveillance zones may be set arbitrarily in relation to the environmental condition of the management area. In this case, information on the surveillance zones may include location information, geographical information, and environmental information of the surveillance zones.

Operation 221 of collecting the environmental information may collect information on an environmental event occurring in the geofence region. The environmental event may refer to a factor that newly occurs in the geofence region and is determined to cause an environmental change in the management area. Operation 221 of collecting the environmental information may collect information on the environmental event, for example, information on the location of occurrence, the scope of influence, and the cause of occurrence of the environmental event.

Operation 222 of analyzing the environmental condition may analyze the environmental condition of the management area based on the collected information. Operation of analyzing the environmental condition of the management area may classify the collected information into a plurality of factors and may analyze the environmental condition of the management area through a combination of the classified factors. For example, operation 222 may include classifying the collected information into the plurality of factors, extracting some of the classified factors, and generating an environmental analysis result of the management area through a combination of the extracted factors.

The classifying into the plurality of factors may classify elements related to the environmental condition of the management area into the plurality of factors. For example, pest information in the geofence region may be collected in relation to the pest control environment of the management area. In this case, the classifying into the plurality of factors may classify the collected information into the plurality of factors. For example, the information collected in relation to the pest control may be classified into the plurality of factors by considering the number of detected pests for each type, an average size of the pests, information on the movement of the pests, and information on a location of discovery.

The extracting of some factors may include generating an individual indicator for each classified factor and extracting a factor of which an individual indicator exceeds a reference risk indicator.

The generating of the individual indicator may generate the individual indicator by applying an individual weight to each of the classified factors. For example, the individual indicator may be set according to a risk level of each type of pest. The extracting of the factors may select and extract a factor of which the individual indicator exceeds the set reference risk indicator. In this case, the reference risk indicator may be set differently depending on the characteristic of the management area. For example, when the management area is a food factory, the reference risk indicator may be set very low compared to other areas.

The generating of the environmental condition analysis result through a combination of the extracted factors may generate a result for the environmental condition of the management area through the extracted factors through the previous operation. For example, when a factor for a certain pest is extracted, the environmental condition of the management area may be analyzed as having a high-risk level for the certain pest.

Operation 222 of analyzing the environmental condition may evaluate the environment of the management area with a comprehensive environmental grade. For example, operation 222 of analyzing the environmental condition may include generating an environmental index quantified by evaluating the environmental condition of the management area and classifying the environmental condition of the management area into one environmental grade of a plurality of reference environmental grades through the generated environmental index.

The generating of the environmental index may include generating a basic index, generating a correction index, and generating the environmental index by correcting the basic index through the correction index.

The basic index may be generated based on the environmental condition of the management area. The basic index may be generated by quantifying the environmental condition of the management area. The correction index may be generated by quantifying the influence of the environment in the geofence region on the environmental condition of the management area. For example, the correction index may be generated by quantifying the influence of the environment of a surveillance zone set in the geofence region on the management area or by quantifying the influence of the environmental event occurring in the geofence region on the environmental condition of the management area.

The generating of the environmental index by correcting the basic index may be repeated multiple times. For example, the process of generating a plurality of correction indices and correcting the basic index through the plurality of correction indices may be repeated several times.

The classifying into the environmental grade may select an environmental grade matching the finally evaluated environmental index from among the plurality of reference environmental grades. In this case, the reference environmental grades may be defined individually depending on the characteristic of the management area. For example, a numerical range of the environmental index may be divided to match the plurality of reference environmental grades. That is, the lower and upper limits of the numerical range of the environmental index may be divided to match the plurality of reference environmental grades.

Operation 223 of generating the management information may generate the management information according to the environmental condition of the management area based on the analysis result. The management information may include an environmental management order required for the management area or the user action guidance according to the environmental condition of the management area. In this case, the environment management order may be a work order for one or more management apparatuses installed on the management area and managing the environment of the management area. In contrast, the management information may include a work order for a management service of a manager required according to the environmental condition of the management area.

The generating of the management information may include defining an environmental management order matching the reference environmental grades, selecting an environmental management order matching the environmental grade of the management area, and reselecting, from among the selected environmental management orders, an environmental management order that a management apparatus may perform.

The generating of the management information may generate a plurality of pieces of management information matching the environmental condition of the management area according to a distance from the management area, that is, a relative location. For example, the management information may include the action guidance required for a user depending on the distance from the management area.

The generating of the management information may include reanalyzing the environmental condition. The reanalyzing may reanalyze the environmental condition of the management area through feedback according to the performance result when a management order or a management service is performed in the management area according to the generated management information.

Operation 23 of transmitting the analysis result may transmit the management information according to the analysis result outwardly. Operation 23 of transmitting the analysis result may transmit the management information according to the analysis result to the management apparatus in the management area. In this case, the management information may include control information for the management apparatus. The management apparatus may manage the environment of the management area according to the transmitted management information. Operation 23 of transmitting the analysis result may transmit the management information to a device. The management information to be transmitted to the device may be determined according to information on the owner of the device. For example, the management information may include the user action guidance or environmental condition analysis information for the management area when the owner of the device is a user. In contrast, the management information may include work order information for a management service that a manager must perform when the owner of the device is the manager of the management area.

Operation 23 of transmitting the analysis result may include operation 231 of receiving a location of the device, determining whether to transmit information on the device, and an operation 232 of setting and transmitting information matching the location of the device.

Operation 231 of receiving the location of the device may receive real-time location information of the device.

The determining of whether to transmit the information on the device may determine whether to transmit the information on the device based on the location information of the device. For example, the determining of whether to transmit the information may determine to transmit the information on the geofence region, for example, the management information on the environmental condition of the management area and condition information in the geofence region only when the received location of the device is in the geofence region.

Operation 232 of setting and transmitting the information matching the location of the device may set and transmit information to be transmitted based on the location information of the device. For example, operation 232 may select and transmit management information matching the location of the device from among the plurality of pieces of management information set according to the location of the device.

Operation 23 of transmitting the analysis result may set a dynamic geofence region for the device and may transmit the analysis result according to an overlapping state between the dynamic geofence region and the geofence region of the management area. For example, operation 23 may transmit the management information according to the analysis result to the device only when the dynamic geofence region overlaps the geofence region of the management area. Operation 23 may select management information matching the degree of overlap between the dynamic geofence region and the geofence region of the management area and may transmit the selected management information to the device.

Operation 23 of transmitting the analysis result may transmit, among the plurality of devices, the management information to the device in the geofence region. For example, the transmitting of the analysis result may recognize the location of the device in the geofence region and may transmit, among devices of which the locations are recognized, the management information to the device that is adjacent to the management area. In this case, the management information may include work order information for the manager.

The environment management method according to an embodiment may predict the environmental condition of the environmental management area at a predetermined time and may select response management information according to the predicted result. The environment management method may transmit selected response management information to the device or the management apparatus at a predetermined time.

FIG. 24 is a flowchart of an environment management method according to an embodiment.

The environment management method according to an embodiment may manage the environment of a management area by setting a geofence for a contamination source. The environment management method may include operation 31 of setting a target geofence, operation 32 of analyzing an environmental condition of the management area, and operation 33 of transmitting the analysis result.

The setting of the target geofence may set the target geofence including a surrounding area based on a location of the contamination source. The setting of the target geofence may include recognizing the contamination source, evaluating the environmental influence of the contamination source on the surrounding area, setting a region of the target geofence based on the evaluating of the environmental influence, and partitioning the region of the target geofence into a plurality of sub-regions.

The evaluating of the environmental influence may include quantifying and calculating a contamination level to which the contamination source affects a certain area. In this case, the calculating of the contamination level may be performed based on geographical information of the certain area, a distance from the contamination source, a congestion level, and environmental information.

The setting of the region of the target geofence may be performed by comparing the contamination level for the certain area with a set reference contamination level. For example, the certain area may be included in the target geofence region when the contamination level of the certain area exceeds the set reference contamination level.

The partitioning into the plurality of sub-regions may partition the set target geofence region into the plurality of sub-regions based on the evaluated contamination level. For example, regions with the same contamination level may form one sub-region.

Operation 32 of analyzing the environmental condition of the management area may analyze the environmental condition of the management area in the target geofence region. In this case, the environmental condition analysis of the management area may be performed through the contamination level of the sub-region where the management area is located.

Furthermore, the analyzing of the environmental condition of the management area may be performed in the same manner as the environmental condition analysis of the management area described above.

Operation 33 of transmitting the analysis result may include recognizing the location of the device and transmitting management information matching the location of the device.

The transmitting of the management information matching the location of the device may select a management area that is adjacent to the location of the device and may transmit the management information according to the environmental condition of the management area.

The transmitting of the analysis result may include setting a dynamic area centered on the location of the device, monitoring an overlapping state between the dynamic area and the target geofence region, and transmitting management information matching the monitoring result to the device.

The transmitting of the management information matching the monitoring result to the device may generate and transmit, to the device, management information on the management area in the sub-region that overlaps the dynamic area. In this case, the environmental information of each overlapping sub-region may be combined and transmitted to the device when it is determined that the plurality of sub-regions overlap the dynamic area.

An environment management system based on a geofence according to an embodiment may include a control server configured to set a target geofence based on a contamination source and configured to analyze an environmental condition of a management area in the target geofence region based on environmental information in the target geofence region, and a device configured to receive information according to the analyzing of the control server.

In an embodiment, the control server 10 may be configured to analyze an environmental condition of at least one of an air quality environment, a water quality environment, a pest control environment, a hygiene environment, and a disease environment in the management area.

In an embodiment, the control server 10 may be configured to evaluate an environmental influence caused by the contamination source according to a distance from the contamination source and configured to set the target geofence based on the evaluation result.

In an embodiment, the control server 10 may be configured to evaluate an influence of the contamination source on an environment with a contamination level and configured to set the target geofence region by comparing the evaluated contamination level with a set reference contamination level.

In an embodiment, when a contamination level of a predetermined area is higher than a reference contamination level, the control server 10 may include the predetermined area in the target geofence region, and when the contamination level of the predetermined area is less than the reference contamination level, the control server 10 may exclude the predetermined area from the target geofence region.

In an embodiment, the contamination level evaluation for a predetermined area may be performed based on geographical information of the predetermined area, a relative distance of the predetermined area to the contamination source, a congestion level of the predetermined area, and environmental information of the predetermined area.

In an embodiment, the control server 10 may be configured to partition the target geofence into a plurality of sub-regions, in which the partitioning into the sub-regions may be determined through a contamination level for the contamination source.

In an embodiment, the control server 10 may be configured to evaluate the environmental condition of the management area based on a contamination level of a sub-region where the management area is located.

In an embodiment, the control server 10 may be configured to determine an environmental grade by analyzing the environmental condition of the management area and configured to select the environmental grade from among a plurality of set reference environmental grades.

In an embodiment, the control server 10 may be configured to generate an environmental index quantified by analyzing the environmental condition of the management area and configured to determine the environmental grade through the environmental index.

In an embodiment, the reference environmental grades may be set to divide a numerical range of the environmental index, in which the dividing into the numerical range may be determined according to a characteristic of the management area.

In an embodiment, the control server 10 may be configured to generate a basic index for the environmental condition of the management area, generate a correction index by quantifying an influence of an environment of the target geofence region on the environmental condition of the management area, and generate the environmental index by correcting the basic index through the correction index.

In an embodiment, the correction index may be set based on a contamination level of a sub-region where the management area is located.

In an embodiment, the control server 10 may be configured to generate at least one reference environmental index for the environmental condition of the management area, generate an expected environmental index of the management area by considering an influence of an environmental event occurring in the geofence region on the management area, and select a response action required for the management area by comparing the reference environmental index with the expected environmental index.

In an embodiment, the control server 10 may be configured to generate an expected environmental index over time by considering at least one of a type, a scale, and an occurrence time point of the environmental event, an occurrence time point of the event, and a distance between management areas.

In an embodiment, the control server 10 may be configured to calculate a slope according to an expected environmental index for each unit time and configured to determine a level of urgency for each unit time according to magnitude of the slope.

An environment management method based on a geofence according to an embodiment may include setting a target geofence based on a location of a contamination source, analyzing an environmental condition of a management area in the target geofence region based on environmental information in the target geofence region, and transmitting management information according to the analysis result to a device based on a location of a device, in which the setting of the target geofence may include recognizing the contamination source, evaluating an environmental influence of the contamination source on a surrounding area of the contamination source, and setting a region of the target geofence based on the evaluating of the environmental influence.

In an embodiment, the evaluating of the environmental influence may include calculating a contamination level quantified by the contamination source for a predetermined area, in which the contamination level may be calculated based on geographical information of the predetermined area, a distance from the contamination source, a congestion level of the predetermined area, and environmental information of the predetermined area.

In an embodiment, the setting of the region of the target geofence region may include the predetermined area in the target geofence region when a contamination level for a predetermined area exceeds a set reference contamination level.

In an embodiment, the setting of the target geofence may further include partitioning the target geofence region into a plurality of sub-regions after the target geofence region is set, in which the partitioning into the sub-regions may be performed based on a numerical value of a contamination level.

A number of embodiments have been described above. Nevertheless, it should be understood that various modifications may be made to these embodiments. For example, suitable results may be achieved if the described techniques are performed in a different order and/or if components in a described system, architecture, device, or circuit are combined in a different manner and/or replaced or supplemented by other components or their equivalents.

## Claims

1. An environment management system based on a geofence, the environment management system comprising:
a control server configured to set a target geofence based on a contamination source and configured to analyze an environmental condition of a management area in a target geofence region based on environmental information in the target geofence region; and
a device configured to receive information according to the analyzing of the control server.

2. The environment management system of claim 1, wherein the control server is configured to analyze an environmental condition of at least one of an air quality environment, a water quality environment, a pest control environment, a hygiene environment, and a disease environment in the management area.

3. The environment management system of claim 1, wherein the control server is configured to evaluate an environmental influence caused by the contamination source according to a distance from the contamination source and configured to set the target geofence based on a evaluation result.

4. The environment management system of claim 3, wherein the control server is configured to evaluate an influence of the contamination source on an environment with a contamination level and configured to set the target geofence region by comparing the evaluated contamination level with a set reference contamination level.

5. The environment management system of claim 4, wherein the control server is configured to:
when a contamination level of a predetermined area is higher than a reference contamination level, comprise the predetermined area in the target geofence region, and
when the contamination level of the predetermined area is less than the reference contamination level, exclude the predetermined area from the target geofence region.

6. The environment management system of claim 4, wherein a contamination level evaluation for a predetermined area is performed based on geographical information of the predetermined area, a relative distance of the predetermined area to the contamination source, a congestion level of the predetermined area, and environmental information of the predetermined area.

7. The environment management system of claim 4, wherein the control server is configured to partition the target geofence into a plurality of sub-regions, wherein the partitioning into the sub-regions is determined through a contamination level for the contamination source.

8. The environment management system of claim 7, wherein the control server is configured to evaluate the environmental condition of the management area based on a contamination level of a sub-region where the management area is located.

9. The environment management system of claim 7, wherein the control server is configured to:
determine an environmental grade by analyzing the environmental condition of the management area; and
select the environmental grade from among a plurality of set reference environmental grades.

10. The environment management system of claim 9, wherein the control server is configured to:
generate an environmental index quantified by analyzing the environmental condition of the management area; and
determine the environmental grade through the environmental index.

11. The environment management system of claim 10, wherein the reference environmental grades are set to divide a numerical range of the environmental index, wherein the dividing into the numerical range is determined according to a characteristic of the management area.

12. The environment management system of claim 10, wherein the control server is configured to:
generate a basic index for the environmental condition of the management area;
generate a correction index by quantifying an influence of an environment of the target geofence region on the environmental condition of the management area; and
generate the environmental index by correcting the basic index through the correction index.

13. The environment management system of claim 12, wherein the correction index is set based on a contamination level of a sub-region where the management area is located.

14. The environment management system of claim 7, wherein the control server is configured to:
generate at least one reference environmental index for the environmental condition of the management area;
generate an expected environmental index of the management area by considering an influence of an environmental event occurring in the geofence region on the management area; and
select a response action required for the management area by comparing the reference environmental index with the expected environmental index.

15. The environment management system of claim 14, wherein the control server is configured to generate an expected environmental index over time by considering at least one of a type, a scale, and an occurrence time point of the environmental event, an occurrence time point of the event, and a distance between management areas.

16. The environment management system of claim 15, wherein the control server is configured to:
calculate a slope according to an expected environmental index for each unit time; and
determine a level of urgency for each unit time according to magnitude of the slope.

17. An environment management method based on a geofence, the environment management method comprising:
setting a target geofence based on a location of a contamination source;
analyzing an environmental condition of a management area in a target geofence region based on environmental information in the target geofence region; and
transmitting management information according to a analysis result to a device based on a location of a device,
wherein the setting of the target geofence comprises:
recognizing the contamination source;
evaluating an environmental influence of the contamination source on a surrounding area of the contamination source; and
setting a region of the target geofence based on the evaluating of the environmental influence.

18. The environment management method of claim 17, wherein the evaluating of the environmental influence comprises calculating a contamination level quantified by the contamination source for a predetermined area,
wherein the contamination level is calculated based on geographical information of the predetermined area, a distance from the contamination source, a congestion level of the predetermined area, and environmental information of the predetermined area.

19. The environment management method of claim 17, wherein the setting of the region of the target geofence region comprises the predetermined area in the target geofence region when a contamination level for a predetermined area exceeds a set reference contamination level.

20. The environment management method of claim 17, wherein the setting of the target geofence further comprises partitioning the target geofence region into a plurality of sub-regions after the target geofence region is set,
wherein the partitioning into the sub-regions is performed based on a numerical value of a contamination level.
